# EUROPÄISCHE PATENTSCHRIFT

(11) **EP 0 388 815 B1**
(45) Veröffentlichungstag und Bekanntmachung des Hinweises auf die Patenterteilung: **19.05.1993**
(21) Anmeldenummer: 90105014.6
(22) Anmeldetag: 16.03.1990
(51) Int. Cl.: B60R 22/20

(54) **Höhenverstellbarer Umlenkbeschlag für Sicherheitsgurte von Kraftfahrzeugen**
Height-adjustable fitting for motor vehicle safety belts
Dispositif de renvoi latéral réglable en hauteur pour ceintures de sécurité de véhicules

(30) Priorität: 21.03.1989 DE 3909311; 18.10.1989 DE 3934766
(43) Veröffentlichungstag der Anmeldung: 26.09.1990
(73) Patentinhaber: Autoliv-Kolb GmbH & Co., D-85203 Dachau (DE)
(72) Erfinder: Steinhüser, Günter, D-2208 Glückstadt (DE)
(74) Vertreter: Gossel, Hans K., Dipl.-Ing.

(56) Entgegenhaltungen:
- DE-A- 2 460 092
- DE-A- 2 506 269
- DE-A- 2 815 918
- DE-A- 3 520 279
- DE-A- 3 539 722
- DE-A- 3 603 140
- DE-A- 3 611 954

## Beschreibung

Die Erfindung betrifft einen höhenverstellbaren Umlenkbeschlag nach dem Oberbegriff des Patentanspruchs 1.

Bei üblichen Dreipunkt-Sicherheitsgurt-Systemen wird zweckmäßigerweise der obere Umlenkbeschlag des Schultergurtes höhenverstellbar ausgebildet, um die Höhe dieses Umlenkbeschlages in der günstigsten Weise an die Größe der zu sichernden Person anpassen zu können.

Ein aus der DE-A-25 06 269 bekannter höhenverstellbarer Umlenkbeschlag ist an dem zentralen Schaft einer kreisscheibenförmigen Halteplatte befestigt, die zwischen den abgewinkelten Längsrändern einer fahrzeugfest gehaltenen Schiene verschieblich geführt ist. Der den Umlenkbeschlag tragende Schaft durchsetzt ein längs verlaufendes Langloch im mittleren Bereich der Schiene, das in den den gewünschten Verstellschritten entsprechenden Abständen an einem Seitenrand mit schräg nach unten verlaufenden Einschnitten versehen ist, in die der Schaft nach entsprechender Verschiebung der Halteplatte einrasten kann. Um den Schaft in seinen unterschiedlichen Einraststellungen in den Einschnitten zu sichern, stützt sich die Halteplatte auf einer parallel zu dem Langloch verlaufenden Blattfeder ab, deren Enden U-förmig umgebogen sind und an der Flanke einer Abwinkelung anliegen. Ein grundsätzlich in gleicher Weise aufgebauter höhenverstellbarer Umlenkbeschlag ist aus der DE-A-24 60 092 bekannt.

Ein in der DE-A-35 20 279 bekannter höhenverstellbarer Umlenkbeschlag ist an einer im Querschnitt rechteckigen Gleitmuffe befestigt, die an einer schmalen Innenflanke mit einer sägezahnförmigen Ratschenverzahnung versehen und auf einer aus einem Flacheisen bestehenden Gleitschiene längsverschieblich geführt ist, die an einer Seite mit einer komplementären Gegenverzahnung versehen ist, wobei die Verzahnungen der Gleitmuffe und der Gleitschiene durch eine entsprechend geformte Blattfeder miteinander in Eingriff gehalten sind, die sich einerseits auf der unverzahnten Seite der Gleitschiene und andererseits auf der unverzahnten Flanke der Gleitmuffe abstützt.

Die bekannten höhenverstellbaren Umlenkbeschläge sind hinsichtlich ihres Bedienungskomforts verbesserungsbedürftig.

Ein aus dem DE-U-86 02 654.2 bekannter Umlenkbeschlag dieser Art läßt sich nur unter erheblichem Kraftaufwand entriegeln und verstellen, wobei überdies nicht sichergestellt ist, daß bei auf das Fahrzeug wirkenden Querbeschleunigungen, wie sie beispielsweise bei einem Seitenaufprall entstehen können, keine selbsttätige Entriegelung stattfindet.

Aus der DE-A-36 03 140 ist ein höhenverstellbarer Umlenkbeschlag der eingangs genannten Gattung bekannt.

Aufgabe der Erfindung ist es daher, einen einfach aufgebauten Umlenkbeschlag der eingangs angegebenen Art zu schaffen, der eine hohe Sicherheit bietet und sich mit relativ geringem Kraftaufwand einfach und leicht verstellen läßt.

Erfindungsgemäß wird diese Aufgabe bei einem Umlenkbeschlag der gattungsgemäßen Art nach einem ersten Vorschlag entsprechend dem kennzeichnenden Teil des Patentanspruchs 1 gelöst. Hier weist die Schiene einen langlochartigen Führungsschlitz mit zueinander parallelen, längs verlaufenden, seitlichen Flanken auf. In dem Führungsschlitz ist ein von der parallel zur Schiene gehaltenen Riegelplatte abgewinkeltes Endteil mit Spiel geführt, dessen Breite etwa der Breite des Führungsschlitzes entspricht. Die Riegelplatte ist im Bereich ihrer dem abgewinkelten Endteil gegenüberliegenden Seite mit einem seitlichen, U-förmig umgebogenen, die Rasteinrichtung bildenden Fortsatz versehen, mit dem diese die Schiene umgreift. Die Schiene ist in dem Bereich, in welchem sie von dem U-förmigen Fortsatz überstrichen wird, mit nockenartigen, die Gegenrasten bildenden Vorsprüngen versehen, deren Abstand etwa der Breite des Fortsatzes entspricht. Der erfindungsgemäße höhenverstellbare Umlenkbeschlag besteht nur aus wenigen Teilen, die eine funktionssichere Verstellung ermöglichen. Auf Grund der Gurtzugkraft stützt sich die Riegelplatte einerseits mit ihrem abgewinkelten Endteil an den Flanken des Führungsschlitzes und andererseits mit ihrem U-förmig umgebogenen Fortsatz auf der Außenseite des hinteren den Führungsschlitz begrenzenden Holms der Schiene zwischen zwei nockenartigen Vorsprüngen oder am Ende der Verstellstrecke nur an einem nockenartigen Vorsprung ab. Eine Verstellung des Umlenkbeschlages ist durch Verschwenken der Riegelplatte um deren abgewinkeltes unteres Endteil gegen Federkraft in einfacher Weise möglich. Dabei erfolgt die Verschwenkung in der Weise, daß sich der U-förmig umgebogene Fortsatz über eine oder mehrere die Gegenraste bildende Vorsprünge schieben läßt.

Zweckmäßigerweise ist die Riegelplatte mit einer auf der gegenüberliegenden Flachseite der Schiene befindlichen Halterplatte verbunden, deren Breite größer ist als die Breite des Führungsschlitzes. Diese Halterplatte fixiert dann gleichzeitig in einfacher Weise die Riegelplatte.

Nach einem zweiten Vorschlag wird die Aufgabe dadurch gelöst, daß die Riegelplatte, die zumindest teilweise breiter ist als der Führungsschlitz, in einem Endbereich ihrer den zahnartigen Vorsprüngen zugewandten Seite mit einem abgewinkelten Vorsatz, dessen Breite in etwa dem Abstand zwischen zwei zahnartigen Vorsprüngen entspricht, versehen ist, daß die Riegelplatte an ihren vorderen und hinteren Seiten den Führungsschlitz durchsetzende Abwinkelungen oder Haltemittel trägt, an denen eine die Riegelplatte haltende Halteplatte befestigt ist, und daß die dem abgewinkelten Fortsatz gegenüberliegende Abwinkelung o.dgl. eine Breite besitzt, die kleiner ist als der Abstand der Vorsprünge von der gegenüberliegenden Flanke des Führungsschlitzes und den Schwenkmittelpunkt für die Riegelplatte definiert. In ihrer Funktion entspricht die Ausführungsform nach diesem zweiten Vorschlag grundsätzlich dem ersten Vorschlag. Im Gegensatz zu dem ersten Vorschlag ist jedoch vorgesehen, daß die zahnartigen Vorsprünge nicht an der Außenseite eines Holmes, sondern an einer inneren Flanke des Führungsschlitzes vorgesehen sind.

Zweckmäßigerweise besitzt nach diesem zweiten Vorschlag die Halteplatte auf ihrer dem Führungsschlitz zugewandten Seite eine rampenartige Erhöhung, die eine sich jeweils immer auf zwei zahnartigen Vorsprüngen abstützende gerade Flanke aufweist und im Bereich der den Schwenkmittelpunkt definierenden Abwinkelung auf ihrer gegenüberliegenden Seite eine abgerundete Flanke hat. Die gerade Flanke verhindert, daß die Abwinkelung zwischen zwei zahnartige Vorsprünge gerät und dadurch im Falle einer Entriegelung ein Verschieben verhindert. Durch die abgerundete Flanke der Rampe ist sichergestellt, daß sich diese bei einem Verschwenken der Riegelplatte auf der geraden Flanke des Führungsschlitzes abstützt und somit eine Entriegelung und ein Verschieben der Riegelplatte zum Zwecke einer Verstellung möglich ist.

In weiterer Ausgestaltung der Erfindung ist vorgesehen, daß die Riegelplatte an ihrer dem abgewinkelten Endteil gegenüberliegenden Seite mit einer etwa mittigen dornartigen Abwinkelung, die ebenfalls den Führungsschlitz durchsetzt, versehen ist und daß die Halteplatte mit den Endbereichen des abgewinkelten Endteils und der dornartigen Abwinkelung verbunden ist.

In dem Führungsschlitz kann eine haarnadelförmig gekrümmte Feder angeordnet sein, die sich mit einem Schenkel auf einer Flanke des Führungsschlitzes und mit ihrem anderen Schenkel auf den von der Riegelplatte abgewinkelten dornartigen Fortsatz abstützt. Der eine Schenkel kann durch entsprechende Abwinkelungen an dem dornartigen Fortsatz in der Weise festgelegt sein, daß die Feder mit ihrem anderen Schenkel auf der Flanke des Führungsschlitzes bei einem Verstellen der Riegelplatte gleitet.

Zweckmäßigerweise besteht die Halteplatte aus Kunststoff, so daß die Reibung bei einem Verschieben vermindert ist.

In einem mehreckigen Loch der Riegelplatte kann ein Bolzen gehalten sein, der mit einem zu dem Loch komplemantären Abschnitt versehen ist, wobei der Bolzen auf seinem gegenüberliegenden Ende ein mit diesem fest verbundenes hülsenartiges Teil trägt, auf dem der Umlenkbeschlag angeordnet ist. Das hülsenartige Teil kann mit einem flanschförmigen Wulst versehen sein, zwischen dem und den Rändern des Führungsschlitzes die Halteplatte gehalten ist. Auf diese Weise dient das hülsenartige Teil gleichzeitig auch der Verbindung der Halteplatte mit der Riegelplatte.

Nach einer besonders vorteilhaften Ausgestaltung ist vorgesehen, daß zumindest die oberen Flanken der nockenartigen Vorsprünge in etwa die Form von Kreisbögen besitzen, die durch Verschwenken der unteren Kante des U-förmig umgebogenen Fortsatzes der Riegelplatte um deren abgewinkeltes Endteil in dem Führungsschlitz entstehen. Diese Ausgestaltung stellt sicher, daß bei einer Verstellung des Umlenkbeschlages die Riegelplatte nicht erst entgegen der Gurtzugkraft verschoben werden muß. Vielmehr ist die Schwenkbewegung der Riegelplatte so auf die nockenartigen Vorsprünge angepaßt, daß diese ohne Bewegung in Gegenrichtung über diese hinwegrutschen kann. Diese Ausgestaltung stellt somit eine besonders leichtgängige Verstellung sicher.

Ein Ausführungsbeispiel der Erfindung wird nachstehend anhand der Zeichnung näher erläutert. In dieser zeigt
- Fig. 1: die der Höhenverstellung des Umlenkbeschlages dienende Vorrichtung in einer Explosionsdarstellung ihrer Einzelteile,
- Fig. 2: eine Rückansicht des Umlenkbeschlages mit der Vorrichtung zu ihrer Höhenverstellung,
- Fig. 3 a) bis c): Schnitte durch die Verstellvorrichtung längs der Linie A-A in Fig. 2 in unterschiedlichen Ausführungsformen,
- Fig. 4: einen Schnitt durch die Führungsschiene längs der Linie C-C in Fig. 2,
- Fig. 5: einen Schnitt durch die Stellvorrichtung längs der Linie B-B in Fig. 2,
- Fig. 6: eine Schnitt durch die Stellvorrichtung längs der Linie D-D in Fig. 5,
- Fig.7: eine der Fig.1 entsprechende Darstellung einer zweiten Ausführungsform eines höhenverstellbaren Umlenkbeschlages in einer Explosionsdarstellung seiner Einzelteile und
- Fig.8: eine Unteransicht der Halteplatte des Ausführungsbeispiels nach Fig.7.

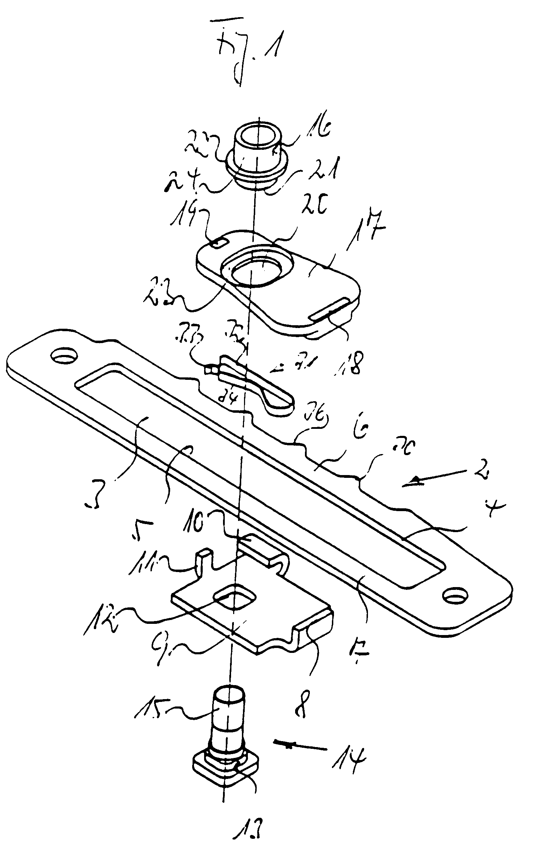

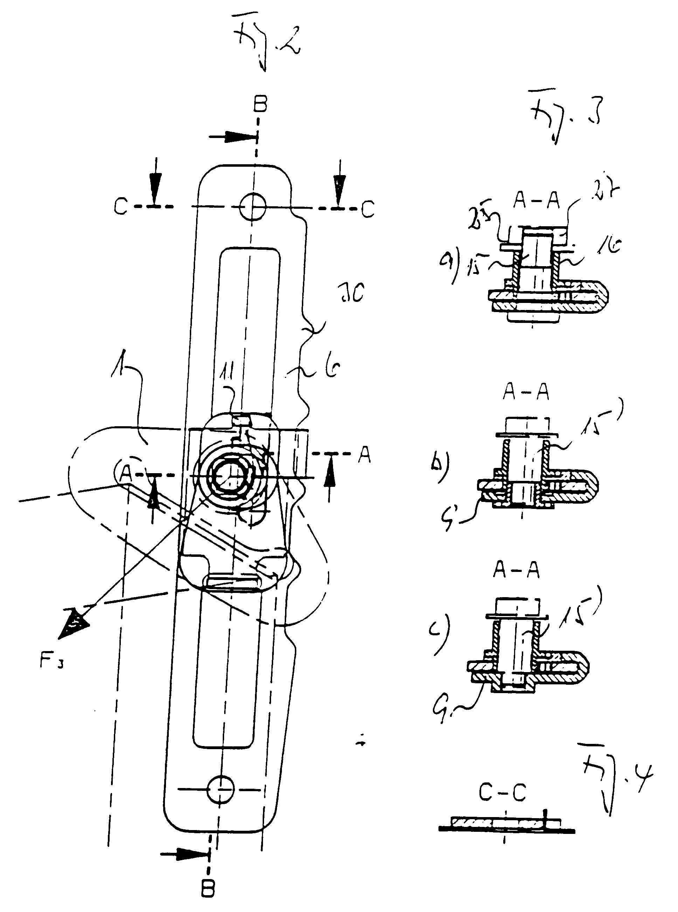

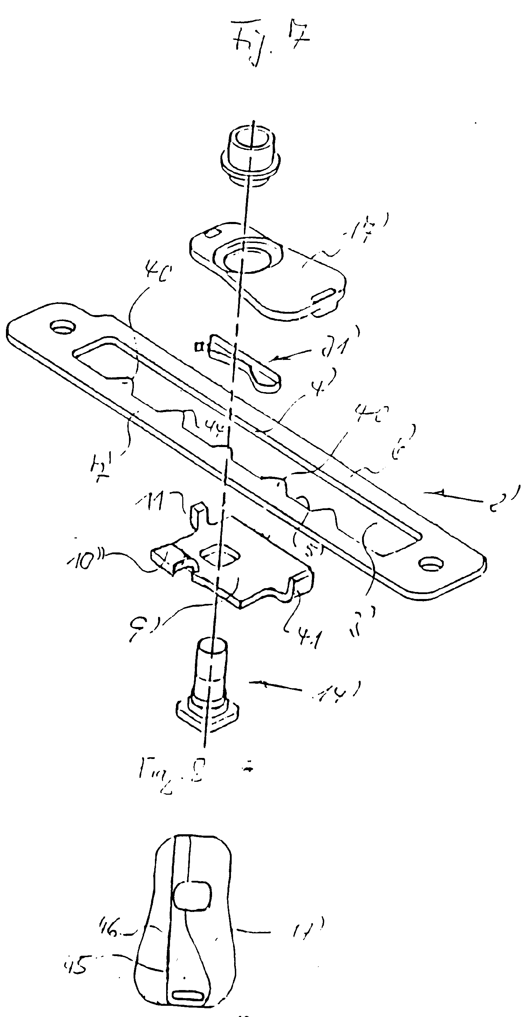

Die Vorrichtung zur Höhenverstellung des in den Fig. 2 und 6 durch gestrichelte Linien angedeuteten dreieckförmigen Umlenkbeschlages 1 besteht aus einer Führungsschiene 2 in Form eines langgestreckten Flachstahlzuschnittes. Dieser etwa rechteckige Flachstahlzuschnitt ist mit einem etwa mittigen längsverlaufenden Führungsschlitz 3 versehen, der durch die zueinander parallelen inneren Flanken 4, 5 der durch den Führungsschlitz 3 gebildeten seitlichen Holme 6, 7 begrenzt ist. An seinem oberen und unteren Ende ist der Flachstahlzuschnitt mit Befestigungsbohrungen beispielsweise zur Befestigung an der sogenannten B-Säule eines Fahrzeugs versehen.

In dem Längsschlitz 3 der Führungsschiene 2 ist das abgewinkelte untere Ende 8 der Riegelplatte 9 geführt. Die Breite des abgewinkelten Endteils 8 ist so groß, daß sich dieses mit Spiel in dem Längsschlitz 3 verschieben läßt.

Im Bereich ihres vorderen Endes ist die Riegelplatte 9 mit einem U-förmig umgebogenen Fortsatz 10 versehen. Weiterhin ist die Riegelplatte 9 an ihrer dem abgewinkelten Ende 8 gegenüberliegenden Seite mit einem in gleicher Weise abgewinkelten dornartigen Fortsatz 11 versehen. In ihrem mittleren Bereich ist die Riegelplatte 9 mit einem etwa quadratischen Loch 12 versehen, das der undrehbaren Halterung des ebenfalls etwa quadratischen Abschnitts 13 das Haltebolzens 14 dient. Auf dem Schaft 15 des Haltebolzens 14 ist das rohrförmige Teil 16 durch übliche und hier nicht näher beschriebene Mittel befestigbar.

Auf der der Riegelplatte 9 gegenüberliegenden Seite der Führungsschiene 2 ist eine Halteplatte 17 aus Kunststoff vorgesehen, die an ihrem unteren und oberen Ende mit Durchbrüchen 18, 19 versehen ist, in die das abgewinkelte untere Ende 8 und der abgewinkelte dornartige Fortsatz 11 der Riegelplatte 9 im montierten Zustand greifen. Weiterhin weist die Halteplatte 17 eine Bohrung 20 auf, die im montierten Zustand das untere Ende 21 des hülsenförmigen Teils 16, das mit dem Bolzen 14 verbunden ist, durchsetzt, wobei sich der flanschförmige Rand 22 des hülsenförmigen Teils 16 auf dem Rand 23 der Halteplatte 17 abstützt und somit die Halteplatte 17 mit der Riegelplatte 9 verbindet. Auf dem Abschnitt 24 des hülsenförmigen Teils 16 ist in üblicher Weise der Umlenkbeschlag 1 gehaltert, wobei zur Festlegung der Bolzen 14 mit einem kopfartigen Teil 25 versehen ist.

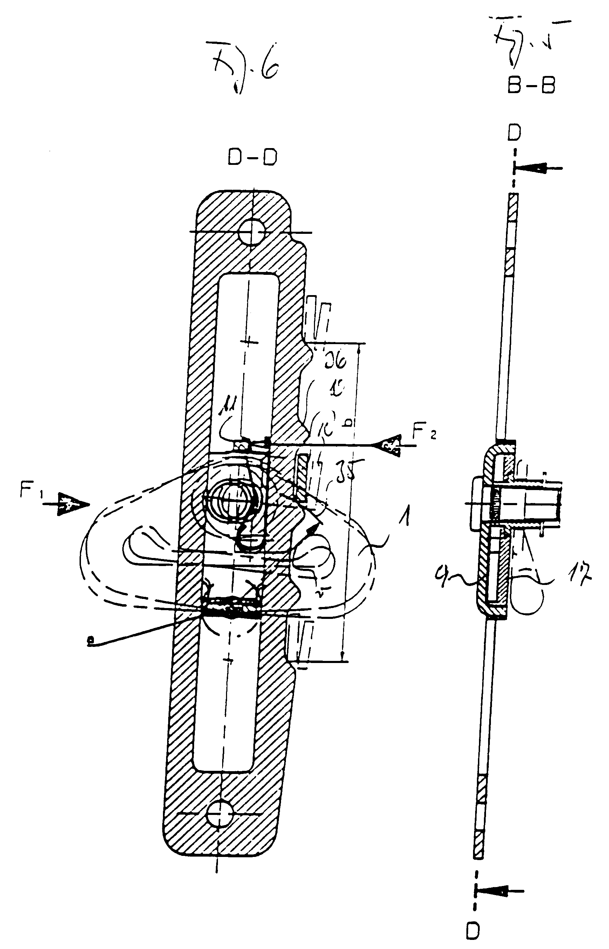

In Fig. 3 a ist schematisch die Befestigung des hülsenartigen Teils 16 auf dem Schaft 15 des Bolzens 14 dargestellt. Dabei ist auf das Ende des Schaftes 15 eine Mutter 27 aufgeschraubt, die sich über eine zwischengelegte Scheibe auf den oberen Rand der Hülse 16 abstützt, wobei die Mutter 27 mit üblichen Sicherungsmitteln versehen ist.

In den Fig. 3 b und 3 c sind unterschiedliche Arten der Befestigung eines Bolzenschafts 15' an der Riegelplatte 9 dargestellt. Beispielsweise kann der Bolzenschaft 15' auch mit der Riegelplatte 9 verschraubt oder vernietet sein.

Der Holm 6 der Schiene 2 ist an seinem im montierten Zustand zum Heck des Fahrzeugs weisenden Ende mit nockenartigen Vorsprüngen 30 versehen. Der Abstand der nockenartigen Vorsprünge 10 voneinander entspricht etwa der Breite des U-förmig umgebogenen Fortsatzes 10 der Riegelplatte 9.

Zwischen der Flanke 4 des Holms 6 und dem abgewinkelten dornartigen Fortsatz 11 der Riegelplatte 9 ist unter Vorspannung eine etwa haarnadelartig gekrümmte Feder 31 eingespannt. Diese Feder stützt sich mit ihrem Schenkel 32 auf der Flanke 4 des Führungsschlitzes 3 ab. Das vordere Ende 33 des anderen Schenkels 34 ist mit einer U-förmigen Abwinkelung versehen, die seitlich den abgewinkelten dornartigen Fortsatz 11 einfaßt.

Zum Zwecke der Verstellung wird auf den Umlenkbeschlag 1 in Richtung des Pfeils F1 Druck ausgeübt, so daß die Riegelplatte 9 um die ideelle Schwenkachse a schwenkt und die untere Kante des U-förmigen Fortsatzes 10 einen Kreisbogen 35 mit dem Radius r um die ideelle Schwenkachse a beschreibt. Die Flanken 36 der nockenartigen Vorsprünge 30 sind in etwa entsprechend dem Kreisbogen 35 kreisbogenförmig gekrümmt, so daß sich zum Zwecke der Verstellung der U-förmig gekrümmte Fortsatz 10 aus seiner Verriegelungsstellung in die aus Fig. 6 entriegelte Stellung 10' verschwenken läßt, ohne daß die Riegelplatte entgegen der Gurtzugrichtung verschoben werden müßte. Die mögliche Verstellstrecke ist in Fig. 6 durch den Doppelpfeil b angedeutet worden.

Die erfindungsgemäße Verstelleinrichtung ist unempfindlich gegen Fahrzeugquerbeschleunigungen, so daß auch bei einem Seitenaufprall des Fahrzeugs kein Entriegeln stattfindet.

Unter der Gurtzugkraft, die in Richtung des Pfeils F3 auf den Umlenkbeschlag 1 wirkt, wird die Riegelplatte 9 in der aus Fig. 2 ersichtlichen Weise in ihrer verriegelten Stellung gehalten.

Beim Entriegeln der Riegelplatte zum Verstellen der Höhe des Umlenkbeschlages ist keine zusätzliche Kraft erforderlich, da sich die Riegelplatte frei um die Rastvorsprünge drehen läßt, ohne daß ein Anheben der Riegelplatte gegen die Gurtrückzugskraft erforderlich wäre.

An gegenüberliegenden Fahrzeugseiten befestigte Führungsschienen sind spiegelbildlich zueinander ausgebildet.

Anhand der Fig.7 und 8 wird nun eine zweite Ausführungsform eines höhenverstellbaren Umlenkbeschlages beschrieben. Die Höhenverstelleinrichtung für den Umlenkbeschlag unterscheidet sich von der nach den Fig.1 bis 6 im wesentlichen nur dadurch, daß die zahnartigen Vorsprünge nicht an der Außenseite des Holmes 6', der den Führungsschlitz 3' begrenzt, angeordnet sind, sondern an der inneren Flanke des gegenüberliegenden Holmes 7'. Die an der inneren Flanke des Holmes 7' angeordneten zahnartigen Vorsprünge 40 weisen grundsätzlich die gleiche Form auf wie die zahn- oder nockenartigen Vorsprünge 30 nach dem Ausführungsbeispiel der Fig.1 bis 6.

Entsprechend der unterschiedlichen Anordnung der zahnartigen Vorsprünge 40 ist die Riegelplatte 9' mit einer hinteren Abwinkelung 41 versehen, deren Breite geringfügig kleiner ist als der Abstand der Scheitel 44 zu der gegenüberliegenden Flanke 4' des Führungsschlitzes 3'.

Die Riegelplatte 9' ist seitlich des dornartigen Fortsatzes 11 mit einem zweimal abgewinkelten Fortsatz 10'' versehen, der somit im Querschnitt etwa L-förmig ist. Der etwa rechtwinkelig auf der Riegelplatte 9' stehende L-Schenkel befindet sich in der Ebene der Schiene 2' und greift im verriegelten Zustand zwischen zwei zahnartige Vorsprünge 40. Der nach außen geführte Schenkel des Fortsatzes 10'' liegt in einer zu der Führungsschiene 2 parallelen Ebene auf dieser. Die Halteplatte 17' ist wie bei dem Ausführungsbeispiel nach den Fig.1 bis 6 an der Abwinkelung 41 und dem dornartigen Fortsatz 11 befestigt.

Um eine einwandfreie Führung der Riegelplatte 9' zu gewährleisten, weist die Halteplatte 17' auf ihrer Unterseite eine rampenartige Erhöhung 45 auf, die eine gerade Flanke 46 besitzt, die so lang ausgeführt ist, daß sie sich immer auf zwei Vorsprüngen 40 abstützt, so daß im verriegelten Zustand die Abwinkelung 41 nicht zwischen zwei zahnartige Vorsprünge 40 geraten kann. Auf ihrer gegenüberliegenden Seite ist die rampenartige Erhöhung 45 mit einer abgerundeten Flanke versehen, die sich bei einer Verschwenkung des Riegelteils auf der Flanke 4' des Holmes 6' der Führungsschiene 2' abstützt.

## Patentansprüche

1. Höhenverstellbarer Umlenkbeschlag (1) für Sicherheitsgurte von Kraftfahrzeugen mit einer an einer etwa vertikalen, fahrzeugfestgehaltenen Schiene (2), die aus einem langgestreckten Flachstahlzuschnitt besteht, sowie einer längsverschieblich geführten, schlittenartigen Riegelplatte (9), die mit einem seitlichen, umgebogenen, eine Rasteinrichtung bildenden Fortsatz (10) versehen ist, mit dem diese die Schiene (2) umgreift, wobei die Schiene (2) auf ihrer Außenseite mit nockenartigen, gegenrastenbildenden Vorsprüngen versehen ist, deren Abstand voneinander etwa der Breite des Fortsatzes (10) entspricht, wobei die Rasteinrichtung durch Federkraft in den Gegenrasten der Schiene (2) gehalten ist und wobei die Rasteinrichtung durch einen gegen die Federkraft von Hand aufgebrachten Druck und entsprechendes Verschieben der Riegelplatte (9) aus dieser ausrastbar und in verschobener Position mit einer anderen Gegenraste verrastbar ist, und mit einem, den Umlenkbeschlag (1) tragenden Bolzen (14), der mit der Riegelplatte (9) verbunden ist,
**dadurch gekennzeichnet,**
daß die Schiene (2) einen langlochartigen Führungsschlitz (3) mit zueinander parallelen, längs verlaufenden, seitlichen Flanken (4, 5) aufweist, daß in dem Führungsschlitz (3) ein von der parallel zur Schiene (2) gehaltenen Riegelplatte (9) abgewinkeltes Endteil (8), dessen Breite etwa der Breite des Führungsschlitzes (3) entspricht, mit Spiel geführt ist, und daß der die Rasteinrichtung bildende Fortsatz (10) U-förmig umgebogen ist.

2. Umlenkbeschlag nach Anspruch 1, dadurch gekennzeichnet, daß die Riegelplatte (9) mit einer Halteplatte (17) auf der Schiene (2) verschieblich befestigt ist, wobei die Halteplatte (17) auf der der Riegelplatte (9) gegenüberliegenden Seite der Schiene (2) angeordnet ist und wobei die Breite der Halteplatte (17) größer ist als die Breite des Führungsschlitzes (3).

3. Höhenverstellbarer Umlenkbeschlag (1) für Sicherheitsgurte von Kraftfahrzeugen mit einer an einer etwa vertikalen, fahrzeugfest gehaltenen Schiene (2) längsverschieblich geführten, schlittenartigen Riegelplatte (9), die mit einer Rasteinrichtung versehen ist, die durch Federkraft in einer von mehreren Gegenrasten der Schiene (2) gehalten und die durch einen gegen die Federkraft von Hand aufgebrachten Druck und entsprechendes Verschieben der Riegelplatte aus dieser ausrastbar und in verschobener Position mit einer anderen Gegenraste verrastbar ist, und mit einem den Umlenkbeschlag (1) tragenden Bolzen (14), der mit der Riegelplatte (9) verbunden ist, dadurch gekennzeichnet, daß die Riegelplatte (9), die teilweise oder ganz breiter ausgeführt ist als der Führungsschlitz (3') an ihrer den zahnartigen Vorsprüngen (40) zugewandten Seite mit einem abgewinkelten Fortsatz (10'') versehen ist, dessen Breite in etwa dem Abstand zwischen zwei zahnartigen Vorsprüngen (40) entspricht, daß die Riegelplatte (9') an ihrer vorderen und ihrer hinteren Seite den Führungsschlitz (3') durchsetzende Abwinkelungen (11, 41) oder Haltermittel trägt, and denen eine die Riegelplatte haltende Halteplatte (17') befestigt ist, und daß die Abwinkelung (41) eine Breite besitzt, die kleiner ist als der Abstand der Vorsprünge (40) von der gegenüberliegenden Flanke (4') des Führungsschlitzes (3') und den Schwenkmittelpunkt für die Riegelplatte (9') definiert.

4. Umlenkbeschlag nach Anspruch 3, dadurch gekennzeichnet, daß die Halteplatte (17') auf ihrer dem Führungsschlitz (3') zugewandten Seite eine rampenförmige Erhöhung (45) besitzt, die eine sich jeweils immer auf zwei zahnartige Vorsprünge (40) abstützende gerade Flanke (46) aufweist und die im Bereich der den Schwenkmittelpunkt definierenden Abwinkelung (41) auf ihrer gegenüberliegenden Seite eine abgerundete Flanke hat.

5. Umlenkbeschlag nach einem der Ansprüche 1 bis 4, dadurch gekennzeichnet, daß die Riegelplatte (9) an ihrer dem abgewinkelten Endteil (8, 41) gegenüberliegenden Seite mit einem etwa mittigen, abgewinkelten, dornartigen Fortsatz (11), der ebenfalls den Führungsschlitz durchsetzt, versehen ist und daß die Halteplatte mit den Endbereichen des abgewinkelten Endteils (8) und des abgewinkelten, dornartigen Fortsatzes (11) verbunden ist.

6. Umlenkbeschlag nach einem der Ansprüche 1 bis 5, dadurch gekennzeichnet, daß in dem Führungsschlitz (3) eine haarnadelförmig gekrümmte Feder (31) angeordnet ist, die sich mit einem Schenkel (32) auf einer Flanke (4) des Führungsschlitzes (3) und mit ihrem anderen Schenkel (34) auf den von der Riegelplatte abgewinkelten, dornartigen Fortsatz (11) abstützt.

7. Umlenkbeschlag nach einem der Ansprüche 1 bis 6, dadurch gekennzeichnet, daß die Halteplatte (17) aus Kunststoff besteht.

8. Umlenkbeschlag nach einem der Ansprüche 1 bis 7, dadurch gekennzeichnet, daß in einem mehreckigen Loch (12) der Riegelplatte (9) ein Bolzen (14), der mit einem zu diesem Loch (12) komplementären Abschnitt (13) versehen ist, gehalten ist, der auf seinem gegenüberliegenden Ende ein mit diesem fest verbundenes, hülsenartiges Teil (16) trägt, auf dem der Umlenkbeschlag (1) angeordnet ist.

9. Umlenkbeschlag nach einem der Ansprüche 1 bis 8, dadurch gekennzeichnet, daß das hülsenartige Teil (16) mit einem flanschförmigen Wulst (22) versehen ist, zwischen dem und den Rändern des Führungsschlitzes (3) die Halteplatte (17) gehalten ist.

10. Umlenkbeschlag nach einem der Ansprüche 1 bis 9, dadurch gekennzeichnet, daß zumindest die oberen Flanken (36) der nockenartigen Vorsprünge (30) in etwa die Form von Kreisbögen (35) besitzen, die der Bewegungsform der unteren Kante des umgebogenen Fortsatzes (10) der Riegelplatte (9) um deren abgewinkeltes Endteil (8, 41) in dem Führungsschlitz (3) entspricht.

## Claims

1. A vertically adjustable loop bracket (1) for safety belts of motor vehicles comprising a carriage-like bolt plate (9) running longitudinally on a generally vertical rail (2), secured to the vehicle and consisting of an elongated piece of flat steel bar, which bolt plate is provided with a lateral curved tail (10) constituting a locking means, with which tail the plate fits around the rail (2), said rail (2) being provided on its outer side with stub-like projections constituting a cooperating locking means, the distance between the projections being generally the same as the width of the tail (10), the locking means being held by spring force in the cooperating locking means on the rail (2), said locking means being able to be unlocked by hand pressure applied against the spring force and corresponding sliding of the bolt plate (9) from the latter and being able to be locked, in the displaced position, with an other opposite locking means, and a bolt (14) bearing the loop bracket (1), said bolt (14) being connected with the bolt plate (9),
**characterized in that**
the rail (2) has a guide slot (3) with mutually parallel, longitudinally extending side flanks (4 and 5), in that in the guide slot (3) there runs with clearance an end part (8) extending at an angle from the bolt plate (9) held parallel to the rail (2), the width of the end part (8) generally being equal to the width of the guide slot (3) and in that the tail (10) constituting the locking means is bent in a U-like configuration.

2. The loop bracket as claimed in claim 1, characterized in that the bolt plate (9) is secured with a holding plate (17) on the rail (2) in a movable manner, the holding plate (17) being arranged on the side of the rail (12), which is opposite to the bolt plate (9), the width of the holding plate (17) being greater than the width of the guide slot (3).

3. A vertically adjustable loop bracket (1) for safety belts of motor vehicles comprising a carriage-like bolt plate (9) running longitudinally on a generally vertical rail (2) mounted on the vehicle, such bolt plate (9) being provided with a locking means, which is held by spring force in one of a plurality of cooperating locking means on the rail (2) and being able to be unlocked by hand pressure against the spring force and corresponding sliding of the bolt plate from the latter and in the displaced position is able to be locked with an other opposite locking means, and with a bolt (14) bearing the loop bracket (1), such bolt (14) being connected with the bolt plate (9), characterized in that the bolt plate (9), which in part or wholly is made wider than the guide slot (3'), is provided on its side facing the tooth-like projections (40) with an angled tail (10''), the width of such tail being approximately equal to the distance between two tooth-like projections (40), in that the bolt plate (9') on its front and its rear side bears bent parts (11 and 41) extending through the guide slot (3'), or holding means, on which a holding plate (17') holding the bolt plate is secured, and in that the bent part (41) has a width, which is less than the distance of the projections (40) from the opposite flank (4') of the guide slot (3') and the pivot point for the bolt plate (9').

4. The loop bracket as claimed in claim 3, characterized in that on its side facing the guide slot (3') the holding plate (17') has a ramp-like raised part (45), which has a straight flank (46) always bearing against two tooth-like projections (40) at a time and which adjacent to the bent part (41) defining the center pivot point has a rounded flank on its opposite side.

5. The loop bracket as claimed in any one of the claims 1 through 4, characterized in that the bolt plate (9) on its side opposite the bent end part (8 and 41) is provided with a generally central bent spur-like tail (11), which also extends through the guide slot and in that the holding plate is connected with the end parts of the bent end part (8) and of the bent, spur-like tail (11).

6. The loop bracket as claimed in any one of the claims 1 through 5, characterized in that a hairpin-like, curved spring (31) is arranged in the guide slot (3), which spring has one limb (32) bearing against a flank (4) of the guide slot (3) whereas its other limb (34) bears against the spur-like tail (11), set at an angle, of the bolt plate.

7. The loop bracket as claimed in any one of claims 1 through 6, characterized in that the holding plate (17) consists of synthetic resin.

8. The loop bracket as claimed in any one of claims 1 through 7, characterized in that a bolt (14) is mounted in a polygonal hole (12) in the bolt plate (9) and has a portion (13) complementary to such hole, such bolt bearing at its opposite end a sleeve-like part (16) which is permanently connected with the same and on which the loop bracket (1) is arranged.

9. The loop bracket as claimed in any one of claims 1 through 8, characterized in that the sleeve-like part (16) is provided with a flange-like bead (22) between which and the edges of the guide slot (3) the holding plate (17) is held.

10. The loop bracket as claimed in any one of claims 1 through 9, characterized in that at least the upper flanks (36) of the stub-like projections (30) generally have the form of circular arcs (35) which correspond to the form of movement of the lower edge of the bent-over tail (10) of the bolt plate (9) about the bent end part (8 and 41) thereof in the guide slot (3).

## Revendications

1. Dispositif de renvoi latéral réglable en hauteur (1) pour ceintures de sécurité de véhicules automobiles, comportant un rail (2) approximativement vertical, fixé au véhicule, consistant en une pièce en acier plat allongée ainsi qu'une plaque de verrouillage (9) mobile en sens longitudinal à la manière d'un chariot qui présente une projection latérale courbée (10) formant un dispositif d'encliquetage, ladite projection s'engageant autour du rail (2), ce dernier étant pourvu sur sa face extérieure de projections à la manière de cames formant des crans d'arrêt opposés dont la distance réciproque correspond environ à la largeur de la projection (10), le dispositif d'encliquetage étant tenu dans les crans d'arrêt opposés du rail (2) par la force d'un ressort et le dispositif d'encliquetage pouvant être dégagé par une pression exercée par la main à l'encontre de la force du ressort et par le déplacement de la plaque de verrouillage (9) et être encliqueté dans cette position déplacée dans un autre cran d'arrêt opposé, comportant par ailleurs un axe (14) portant le dispositif de renvoi latéral (1), qui est raccordé avec la plaque de verrouillage (9),
**caractérisé en ce que**
le rail (2) présente une fente de guidage (3) à la manière d'un trou oblong avec des flancs (4, 5) latéraux réciproquement parallèles et s'étendant en sens longitudinal, qu'une pièce d'extrémité (8) courbée par rapport à la plaque de verrouillage (9) qui est maintenue parallèlement au rail (2) est guidée avec un jeu dans la fente de guidage, la largeur de la pièce d'extrémité (8) correspondant approximativement à la largeur de la fente de guidage (3), et que la projection (10) formant le dispositif d'encliquetage est courbée en forme de U.

2. Dispositif de renvoi latéral selon la revendication 1, caractérisé en ce que la plaque de verrouillage (9) est fixée de manière mobile au moyen d'une plaque de fixation (17) sur le rail (2), la plaque de fixation (17) étant disposée sur le côté du rail (2) opposé à la plaque de verrouillage (9) et la largeur de la plaque de fixation (17) étant supérieure à la largeur de la fente de verrouillage (3).

3. Dispositif de renvoi latéral réglable en hauteur (1) pour ceintures de sécurité de véhicules automobiles comportant une plaque de verrouillage (9) à la manière d'un chariot qui est guidé de manière à pouvoir se déplacer longitudinalement sur un rail (2) approximativement vertical et fixé au véhicule, laquelle plaque de verrouillage étant pourvue d'un dispositif d'encliquetage qui est maintenu par la force d'un ressort dans un parmi plusieurs crans d'arrêt du rail (2) et qui peut être dégagé par la pression exercée par la main contre la force du ressort et par le déplacement correspondant de la plaque de verrouillage et qui, dans la position déplacée, peut s'encliqueter dans un autre cran d'arrêt, comportant par ailleurs un axe (14) portant le dispositif de renvoi latéral (1), qui est raccordé à la plaque de verrouillage (9), caractérisé en ce que la plaque de verrouillage (9) qui, partiellement ou intégralement, est exécutée en une plus grande largeur que la fente de guidage (3') présente sur son côté tourné vers les projections dentelées (40) une projection courbée (10'') dont la largeur correspond approximativement à la distance entre deux projections dentelées (40), que la plaque de verrouillage (9') porte sur ses côtés avant et arrière des courbures (11, 41) ou des moyens de fixation traversant la fente de guidage (3'), auxquelles une plaque de fixation (17') portant la plaque de verrouillage est fixée, et que la courbure (41) possède une largeur inférieure à la distance entre les projections (40) du flanc (4') opposé de la fente de guidage (3') et qui définit le centre de pivotement pour la plaque de verrouillage (9').

4. Dispositif de renvoi latéral selon la revendication 3, caractérisé en ce que la plaque de fixation (17') sur son côté tourné vers la fente de guidage (3') possède une élévation (45) à la manière d'une rampe, qui présente un flanc droit (46) qui s'appuie toujours sur deux projections dentelées (40) et qui, dans la zone de la courbure (41) définissant le centre de pivotement, possède sur son côté opposé un flanc arrondi.

5. Dispositif de renvoi latéral selon l'une des revendications 1 à 4, caractérisé en ce que la plaque de verrouillage (9), sur son côté opposé à la pièce d'extrémité courbée (8, 41) est pourvue d'une projection (11) à la manière d'un ergot à peu près central et courbé qui traverse également la fente de guidage, et que la plaque de fixation est reliée aux zones d'extrémité de la pièce d'extrémité courbée (8) et de la projection courbée à la manière d'un ergot (11).

6. Dispositif de renvoi latéral selon l'une des revendications 1 à 5, caractérisé en ce qu'un ressort (31) courbé en épingle à cheveux est disposé dans la fente de guidage (3), ressort qui par une branche (32) s'appuie sur un flanc (4) de la fente de guidage (3) et avec son autre branche (34) sur la projection (11) à la manière d'un ergot courbé par rapport à la plaque de verrouillage.

7. Dispositif de renvoi latéral selon l'une des revendications 1 à 6, caractérisé en ce que la plaque de fixation (17) est en plastique.

8. Dispositif de renvoi latéral selon l'une des revendications 1 à 7, caractérisé en ce que dans un trou polygonal (12) de la plaque de verrouillage (9) un axe (14) présentant une section (13) complémentaire par rapport à ce trou (12) est maintenu, qui à son extrémité opposé porte une pièce (16) à la manière d'une douille fermement reliée à la section, sur laquelle le dispositif de renvoi latéral (1) est disposé.

9. Dispositif de renvoi latéral selon l'une des revendications 1 à 8, caractérisé en ce que la pièce (16) à la manière d'une douille est pourvue d'un bourrelet (22) en forme d'une flasque, entre lequel et les bords de la fente de guidage (3) la plaque de fixation (17) est tenue.

10. Dispositif de renvoi latéral selon l'une des revendications 1 à 9, caractérisé en ce qu'au moins les flancs supérieurs (36) des projections à la manière de cames (30) possèdent approximativement la forme d'arcs de cercle (35) qui correspondent à la forme de mouvement de l'arète inférieure de la projection courbée (10) de la plaque de verrouillage (9) autour de la partie d'extrémité courbée (8, 41) dans la fente de guidage (3).
